# EUROPEAN PATENT APPLICATION

(11) **EP 1 873 520 A1**
(43) Date of publication of application: **02.01.2008**
(21) Application number: 06729645.9
(22) Date of filing: 22.03.2006
(51) Int. Cl.: G01N 30/26, B01D 15/00, F16K 27/00, G01N 30/46, G01N 30/88

(54) **BLOCK VALVE AND PSEUDO-MOVING BED TYPE CHROMATOGRAPHIC SEPARATING DEVICE WITH THE BLOCK VALVE**

(30) Priority: 23.03.2005 JP 2005083123
(71) Applicant: Daicel Chemical Industries, Ltd., Kita-ku, Osaka-shi Osaka 530-0001 (JP)
(72) Inventor: MINODA, Toshiharu, Arai Plant, Myoko-shi, Niigata 944 (JP); YAMAUCHI, Takatsugu, Otake Plant, Otake-shi, Hiroshima 739-0695 (JP)
(74) Representative: Grünecker, Kinkeldey, Stockmair & Schwanhäusser Anwaltssozietät
(86) International application number: PCT/JP2006/305678
(87) International publication number: WO 2006/101114

(57) **Abstract**

A block valve of the present invention comprises; a block portion (1) comprised of a trunk fluid channel penetrating the block portion (1) and four branch fluid channels branching in pair from the trunk fluid channel, and four valve members (2) for permitting or cutting of communication of each of the branch fluid channels, wherein the branch fluid channels are formed so that, in an arrow direction X indicating the extending direction of the trunk fluid channel, the forward valve member (2) do not ride over the backward valve member (2). Internal volume and residence area of the block valve of the present invention are smaller than those of conventional block valve.

## Description

### Technical Field

The present invention relates to a block valve for switching over a fluid channel for a fluid and suited to the switchover of the fluid channel in a Simulated Moving Bed type chromatographic separation apparatus (which will hereinafter also be abbreviated to an "SMB apparatus"). Background Arts

The SMB apparatus has hitherto been known as a means that separates a desired substance from within a mixture. In the SMB apparatus, with respect to an endless fluid channel built up by connecting a plurality of columns, supply positions of a sample which contain a target substance and a mobile phase and discharge positions of the mobile phase are moved at a predetermined interval while keeping a relative positional relationship between the supply positions and the discharge positions. This enables the SMB apparatus to consecutively supply the sample and to consecutively separate and discharge the target substance.

Known as a means for switching over the fluid channel in the SMB apparatus is a block valve comprising a block portion formed with the plurality of fluid channels and a plurality of valve members that permit and cut off communications of arbitrary fluid channels with each other in the plurality of fluid channels.

Exemplified as the block valve is a block valve A, wherein a valve V1 having one channel at one end and two channels at the other end, a valve V2 having one channel at one end and one channel at the other end and a valve V3 having one channel at one end and one channel at the other end, are formed together with these channels within one block 1; the channel at one end of the valve V1, one channel at the other end of the valve V1, the channel at one end of the valve V2 and the channel at one end of the valve V3 respectively have aperture portions A, B, C and D outside the block; and another channel at the other end of the valve V1, the channel at the other end of the valve V2 and the channel at the other end of the valve V3 communicate with each other. In this type of block valve A, the aperture portion B is formed in a position interposed between the valve V1 and the valve V2 provided in directions orthogonal to each other, and the aperture portion C is formed in a position interposed between the valve V2 and the valve V3 provided in directions orthogonal to each other (see, e.g. , FIGS. 1 and 2 of Patent document 1).

Exemplified further as the block valve described above is a block valve B (see, e.g., FIG. 2 of Patent document 2), wherein the block valve includes, e.g., a couple of cylinder boxes disposed upwards and downward and a couple of electromagnetic valve devices provided for the upper and lower cylinder boxes and disposed so as to interpose the cylinder boxes from both sides, and each cylinder box is formed with a first fluid channel penetrating the cylinder box vertically, a second fluid channel branching off from a trunk fluid channel toward each electromagnetic valve device, and a third fluid channel connected orthogonally to the second fluid channel and opened/closed by the electromagnetic valve device.

By the way, in the SMB apparatus, a volume of space (Vs) of the whole apparatus might become comparatively large for an internal volume (Vc) of a column due to an internal volume held by a component itself used for the apparatus. In the SMB apparatus, if a ratio given by Vs/Vc is large, separating performance for separating a target substance from a sample declines due to diffusion of a mobile phase in the apparatus. As a result, such a problem may arise as to affect a quality of a product obtained by the SMB apparatus.

Further, the SMB apparatus has another problem that if a residence area exists in the fluid channel of the apparatus, a residual matter of the sample etc may occur in the residence area, and a cleaning characteristic of the apparatus may get deteriorated, and the quality of the product may thereby be affected.

These problems in the SMB apparatus are conspicuous especially in a bench scale apparatus. Moreover, in the case of manufacturing an optical isomer by separation, the optical isomer is applied as a product mainly to medicines and pharmaceuticals. Even a small quantity of this type of product is comparatively expensive, and hence the problems described above are serious.

It is therefore required of the components used in the SMB apparatus to decrease both the internal volume and the residence area to the greatest possible degree.

The block valve A is formed with, for example, the first fluid channel extending toward the central portion of the block from the valve V2 and with the second fluid channel formed in a shape extending toward the central portion of the block from the valve V2, bent at an acute angle and reaching the aperture portion C. In this type of structure, a length of the first fluid channel is, because the second retuning fluid channel passes through between the two valves orthogonal to each other, determined corresponding to a diameter of the second fluid channel. Hence, the length of the first fluid channel is larger than a desired length, depending on how the valve V2 and other valves are manipulated or depending on a form of the first fluid channel, and, when closing the valve V2, the fluid in no small quantity might stay in the first fluid channel. Thus, the block valve A has a room for examination in terms of reducing the residence area.

Moreover, the block valve B takes a structure that the electromagnetic valve devices are vertically superposed. Therefore, a length of the cylinder box in the vertical direction is determined based on a height of the electromagnetic valve device. Accordingly, the length of the first fluid channel in the block valve B is determined by a cause derived from a component other than the fluid channels, such as the superposing height of the electromagnetic valve devices. Thus, the block valve B has a room for examination from a viewpoint of reducing the internal volume.
Patent document 1: Japanese Patent Application Laid-Open Publication No.2004-186243
Patent document 2: International Publication Pamphlet No.01/033210

### Disclosure of the Invention

The present invention provides, in a block valve enabling a plurality of fluid channels to be connected individually to a certain fluid channel, a block valve having a smaller internal volume and a smaller residence area than by the conventional block valves.

Further, the present invention provides an SMB apparatus having a small internal volume and a small residence area, which are derived from structures of components of the SMB apparatus.

The present invention provides, in a block valve comprising a block portion formed with a trunk fluid channel and a plurality of branch fluid channels branching off from the trunk fluid channel and a plurality of valve members permitting or cutting off communications of the branch fluid channels, a block valve in which to dispose the branch fluid channels in positions causing no interference of the branch fluid channels with each other so as not to affect a distance from the trunk fluid channel to the valve member and in which to dispose the valve members in positions causing no interference of drive units for the valve members with each other so as not to affect a length of the trunk fluid channel.

Namely, a block valve according to the present invention comprises: a block portion having fluid channels for a fluid formed in the block portion; and a plurality of valve members permitting or cutting off communications of the fluid channels formed in the block portion, the block portion comprising: a trunk fluid channel penetrating the block portion; and plural couples of branch fluid channels branching off by twos from each of two or more points of the trunk fluid channel in an extending direction of the trunk fluid channel and establishing communications between the trunk fluid channel and the outside of the block portion, the valve member comprising: a valve element provided corresponding to each of the branch fluid channels and moving forward to and backward from the trunk fluid channel in order to cut off or permit the communication of the branch fluid channel; and a drive unit for moving the valve element forward to and backward from the trunk fluid channel, wherein the branch fluid channel is comprised of a bifurcating fluid channel bifurcating from the trunk fluid channel, a valve cylinder connected to the bifurcating fluid channel, having a sectional area larger than that of the bifurcating fluid channel and housing the valve element, a valve seat, formed between the bifurcating fluid channel and the valve cylinder, to and from which the valve element gets closely fitted and separated away, and a communicating fluid channel holed in the valve seat and establishing a communication between the valve cylinder and the outside of the block portion; a radius of the valve cylinder is larger than a sum of a radius of the trunk fluid channel and a diameter of the communicating fluid channel; an angle θ is equal to or larger than 90° but equal to or smaller than 180°, where θ is the angle made by a couple of the bifurcating fluid channels when viewed in the extending direction of the trunk fluid channel; when the angle θ is 180°, the communicating fluid channels in the couple of the branch fluid channels are fluid channels holed in the valve seats in face-to-face positions, with the couple of the bifurcating fluid channels being interposed therebetween, and formed in a shape enabling the communication with the outside of the block portion; when the angle θ is equal to or larger than 90° but smaller than 180°, the communicating fluid channels in the couple of the branch fluid channels are fluid channels holed in the valve seats in positions opposite to the side on which to make the angle θ, and formed in a shape enabling the communication with the outside of the block portion; and couples of the branch fluid channels neighboring to each other in the extending direction of the trunk fluid channel are formed in a shape disabling the extending directions of the bifurcating fluid channels to be overlapped with each other when viewed in the extending direction of the trunk fluid channel, and are also formed in a shape disabling, when providing the valve members, the valve members to be overlapped with each other in the extending direction of the trunk fluid channel.

According to the construction described above, even when the branch fluid channels branching off from the trunk fluid channel are formed in a shape turning round back toward the trunk fluid channel, the block portion corresponding to the couple of the branch fluid channels can be provided without being affected by an intermediary of the communicating fluid channel. Hence, a distance from the trunk fluid channel to the valve seat can be decreased without being affected by the shape of the branch fluid channel. It is therefore possible to further reduce the residence area.

Moreover, according to the construction described above, the valve members are provided in the positions that avoid overlapping of the valve members with each other in the extending direction of the trunk fluid channel, thereby enabling a length of the trunk fluid channel to be shorter than a length of that when the valve members overlapped. It is therefore possible to further reduce the internal volume.

Furthermore, the present invention provides, in addition to the construction described above, the block valve, wherein the angle θ is 180° or 90°, and, when viewed in the extending direction of the trunk fluid channel, two straight lines orthogonal to each other are formed by the bifurcating fluid channels.

According to the construction described above, it is further possible to take a structure of overlapping the couple of the branch fluid channels and the block portion corresponding to this couple of branch fluid channels in a way that rotates these branch fluid channels and the block portion through 90° or 180°.

Further, the present invention provides, in an SMB apparatus comprising: an endless fluid channel comprised of a plurality of columns each storing a separating agent for separating a target substance in a sample containing the target substance and a plurality of connection fluid channels that connect the columns in series; a plurality of fluid channel switching devices provided respectively in the connection fluid channels; and a plurality of fluid channels connected respectively to the fluid channel switching devices, the plurality of fluid channels including: a first fluid channel for supplying a mobile phase to the endless fluid channel; a second fluid channel for supplying the sample to the endless fluid channel; and third and fourth fluid channels for discharging the mobile phase from the endless fluid channel, the mobile phase containing the target substance being discharged from the endless fluid channel via one or both of the third and fourth fluid channels, an apparatus in which the fluid channel switching devices are defined as the block valve of the present invention, the connection fluid channels include the trunk fluid channel, and the plurality of fluid channels is connected respectively to the branch fluid channels.

According to the construction described above, it is possible to reduce both of the residence area and the internal volume due to the fluid channel switching devices. Hence, the SMB apparatus exhibiting high separating performance can be provided.

Moreover, the present invention provides, in addition to the construction given above, the SMB apparatus in which the target substance is an optical isomer, and the separating agent is a polysaccharide derivative selected from a group consisting of an ester derivative of cellulose, a carbamate derivative of cellulose, an ester derivative of amylose and a carbamate derivative of amylose.

According to the construction described above, the expensive optical isomer for applications to the medicines and the pharmaceuticals can be further manufactured with high productivity.

The block valve of the present invention is, since the extending directions of the same couple of bifurcating fluid channels, the positions of the communicating fluid channels for the bifurcating fluid channels corresponding to the bifurcating fluid channels, the extending directions and the positional relationship of the different couple of bifurcating fluid channels, are specified, can reduce the internal volume and the residence area than that of the conventional block valves in the block valve which can connect the arbitrary branch fluid channels, to the trunk fluid channel, from within the plurality of branch fluid channels.

The block valve of the present invention is, when taking a structure of having a couple of branch fluid channels branching off rectilinearly from the trunk fluid channel or a structure of having a couples of branch fluid channels branching off in directions orthogonal to each other from the trunk fluid channel, and providing couples of the branch fluid channels in the extending direction of the trunk fluid channel in a way that rotates one couple of branch fluid channels through 90° or 180° with respect to the other couple of branch fluid channels, more effective in terms of increasing the number of branch fluid channels connectable to the trunk fluid channel.

The SMB apparatus of the present invention involves using the block valve of the present invention as the fluid channel switching devices that arbitrarily connect the first through fourth fluid channels to the endless fluid channel, and hence it is possible to reduce both of the internal volume and the residence area due to the structures of the components.

The SMB apparatus of the present invention, when separating and manufacturing the optical isomer using a polysaccharide derivative as a separating agent, is more effective from a viewpoint of achieving high separating performance and high productivity.

### Brief Description of the Drawings

[FIG. 1] A perspective view of a block valve of a first embodiment of the present invention.
[FIG. 2] A view showing a section when cutting the block valve along the line A-A' in FIG. 1.
[FIG. 3] A view showing a section when cutting the block valve along the line B-B' in FIG. 1.
[FIG. 4] A view showing a section when cutting the block valve along the line C-C' in FIG. 1.
[FIG. 5] An enlarged view showing main components in section when cutting the block valve along the line C-C' in FIG. 1.
[FIG. 6] An enlarged view showing the main components in section when cutting the block valve along the line D-D' in FIG. 1.
[FIG. 7] A perspective view of a block valve of another embodiment of the present invention.
[FIG. 8] A view showing a section when cutting the block valve along the line A-A' in FIG. 7.
[FIG. 9] A view showing a section when cutting the block valve along the line B-B' in FIG. 7.
[FIG. 10] A view showing a section when cutting the block valve along the line C-C' in FIG. 7.
[FIG. 11] An enlarged view showing a section when cutting the block valve along the line C-C' in FIG. 7.
[FIG. 12] An enlarged view showing main components in section when cutting the block valve along the line C-C' in FIG. 7.
[FIG. 13] A view showing main components of section in a vertical direction to an arrow direction X of a block valve in still another embodiment of the present invention.
[FIG. 14] A view showing main components in section in a vertical direction to an arrow direction X of a block valve of yet another embodiment of the present invention.
[FIG. 15] A view showing main components in section in a vertical direction to an arrow direction X of a block valve of further another embodiment of the present invention.
[FIG. 16] A view schematically illustrating a construction of the main components of an SMB apparatus of one embodiment of the present invention.
[FIG. 17] A perspective view of a valve member parallel type block valve.
[FIG. 18] A view showing a section when cutting the block valve along the line A-A' in FIG. 17.

### Brief Description of Reference Numerals and Symbols

- 1, 11, 21, 31, 41, 51: block portion
- 2: valve member
- 2a: diaphragm
- 2b: actuator
- 2c: valve shaft
- 3: trunk fluid channel
- 4, 24, 34, 44, 54: first branch fluid channel
- 4a, 24a, 34a, 44a, 54a: first bifurcating fluid channel
- 4b, 24b: first valve cylinder
- 4c, 24c, 34c, 44c, 54c: first valve seat
- 4d, 24d, 34d, 44d, 54d: first communicating fluid channel
- 5, 25, 35, 45, 55: second branch fluid channel
- 5a, 25a, 35a, 45a, 55a: second bifurcating fluid channel
- 5b, 25b: second valve cylinder
- 5c, 25c, 45c, 55c: second valve seat
- 5d, 25d, 35d, 45d, 55d: second communicating fluid channel
- 6, 26: third branch fluid channel
- 6a, 26a: third bifurcating fluid channel
- 6b, 26b: third valve cylinder
- 6c, 26c: third valve seat
- 6d, 26d: third communicating fluid channel
- 7, 27: fourth branch fluid channel
- 7a, 27a: fourth bifurcating fluid channel
- 7b, 27b: fourth valve cylinder
- 7c, 27c: fourth valve seat
- 7d, 27d: fourth communicating fluid channel
- 8: nozzle
- 61a - 61d: column
- 62a - 62d: connection fluid channel
- 63a - 63d: fluid channel switching device
- 64: first fluid channel
- 65: second fluid channel
- 66: third fluid channel
- 67: fourth fluid channel
- L1, L2: distance between different couples of branch fluid channels
- X: arrow indicating extending direction of trunk fluid channel 3

### Best Mode for Carrying out the Invention

### <Block Valve of the Present Invention>

A block valve of the present invention comprises a block portion having liquid channels for a liquid formed in the block valve and a plurality of valve members that permit or cut off communications of the fluid channels formed in the block portion.

The block portion has a trunk fluid channel penetrating the block portion and branch fluid channels branching off from the trunk fluid channel and establishing the communication between the trunk fluid channel and the outside of the block portion. A shape of the block portion is not particularly limited. The shape of the block portion is exemplified by a polygonal shape such as a square prism and a hexagonal prism, a shape of column such as a circular column and an elliptical column, and a spherelike body such as a ball and an egg-shaped body. The shape of the block portion can be properly determined corresponding to an interval between the branch fluid channels and a direction thereof in an extending direction of the trunk fluid channel.

The valve member is provided corresponding to each of the branch fluid channels. The valve member comprises the valve element for cutting off or permitting the communication of the branch fluid channel in a way that moves forward to or backward from the trunk fluid channel, and a drive unit for moving the valve element forward to and backward from the trunk fluid channel.

The valve element is not limited in particular if capable of opening and closing a fluid channel for liquid through its reciprocating motions. The valve element is exemplified by a known valve element such as a diaphragm.

The drive unit is not especially limited if being a device that moves the valve element close to and away from the trunk fluid channel. The drive unit is exemplified by a known drive unit such as an actuator.

The branch fluid channels are the fluid channels formed so as to branch off by twos from each of two or more points along the trunk fluid channel in the extending direction of the trunk fluid channel. The number of the branch fluid channels is not particularly restricted but can be determined corresponding to an application of the block valve. For example, in the block valve for the Simulated Moving Bed type chromatographic separation apparatus, the number of the branch fluid channels is preferably 4 through 8 and more preferably 4 through 6.

The branch fluid channel can be comprised of a bifurcating fluid channel bifurcating from the trunk fluid channel, a valve cylinder connected to the bifurcating fluid channel, having a sectional area larger than that of the bifurcating fluid channel and housing the valve element, a valve seat, formed between the bifurcating fluid channel and the valve cylinder, to and from which the valve element gets closely fitted and separated away, and a communicating fluid channel holed in the valve seat and establishing the communication between the valve cylinder and the outside of the block portion.

The bifurcating fluid channel is a fluid channel that gets the trunk fluid channel and the valve cylinder communicated with each other. A length of the bifurcating fluid channel differs depending on diameters of the trunk fluid channel and of the branch fluid channel and shapes and types of the valve seat, valve cylinder, and the valve element, however, it is preferable in terms of reducing both of a residence area and an internal volume that a ratio of a length of the bifurcating fluid channel to a length of the trunk fluid channel (bifurcating fluid channel length/trunk fluid channel length) be 1/12 through 1/2.

It is to be noted that a distance between different couples of the branch fluid channels neighboring to each other in the extending direction of the trunk fluid channel, can be determined corresponding to the length of the bifurcating fluid channel, a shape and a size of a connecting end of the valve member to the block portion and a size of the valve member. It is preferable in terms of reducing both of the retention are and the internal volume that the distance between the couples of the branch fluid channels adjacent to each other in the extending direction of the trunk fluid channel be smaller than a maximum height of the valve member when installing the valve member in the block portion, be, e.g., 0.4-fold through 6.0-fold the length of the bifurcating fluid channel, and be, e.g., 0.35-fold through 2-fold a length (diameter) of the connecting end when the connecting end of the valve member to the block portion takes a circular shape.

The valve cylinder houses the valve element and forms the fluid channel that establishes the communication between the bifurcating fluid channel and the communicating fluid channel when the branch fluid channel gets communicated. A length of the valve cylinder is not particularly limited. The valve cylinder is constructed, in terms of a point that the communicating fluid channel is holed in the valve seat, to have a radius larger than a sum of a radius of the trunk fluid channel and a diameter of the communicating fluid channel.

The valve seat is not especially restricted if being a surface formed so that the valve element is enabled to get closely fitted to and separated away from the valve seat in order to cut off or permit the communication of the branch fluid channel (i.e., if being a member having this type of surface). The valve seat may be an inclined surface with its sectional area enlarged gradually to the valve cylinder from the bifurcating fluid channel, may also be a step-shaped surface with its sectional area enlarged stepwise toward the valve cylinder from the bifurcating fluid channel, and may further be a flat surface with its sectional area enlarged straightly to the valve cylinder from the bifurcating fluid channel.

The communicating fluid channel is not particularly restricted if being the fluid channel establishing the communication between the valve cylinder and the outside of the block portion. It is preferable from a viewpoint of providing plural couples of branch fluid channels without being overlapped with the block portion in the extending direction of the trunk fluid channel that the communicating fluid channel be the fluid channel formed so as to overlap the communicating fluid channel with the block portion in the extending direction of the trunk fluid channel. A shape of this type of communicating fluid channel can be determined corresponding to extending directions of the bifurcating fluid channels of the couples of the branch fluid channels neighboring to each other in the extending direction of the trunk fluid channel.

In the present invention, let θ be an angle made by a couple of the bifurcating fluid channels as viewed in the extending direction of the trunk fluid channel, the angle θ is equal to or larger than 90° but equal to or smaller than 180°. The angle θ is not particularly limited if within the range of angles described above. The angle θ is specifically exemplified such as 90°, 180° and 120°.

If the angle θ is 180°, the respective communicating fluid channels in the couple of branch fluid channels are the fluid channels holed in the valve seats in face-to-face positions, with a couple of the bifurcating fluid channels being interposed therebetween, and formed in a shape enabling the communication with the outside of the block portion.

Further, if the angle θ is equal to or larger than 90° but smaller than 180°, the respective communicating fluid channels in the couple of the branch fluid channels are the fluid channels holed in the valve seats in positions opposite to the side on which to make the angle θ, and formed in a shape enabling the communication with the outside of the block portion.

Moreover, in the present invention, couples of the branch fluid channels neighboring to each other in the extending direction of the trunk fluid channel are formed in a shape disabling the extending directions of the respective bifurcating fluid channels to be overlapped with each other when viewed in the extending direction of the trunk fluid channel. Further, the couples of the branch fluid channels neighboring to each other in the extending direction of the trunk fluid channel are formed in a shape disabling, when providing the valve members, these valve members to be overlapped with each other in the extending direction of the trunk fluid channel.

Herein, a definition of "the extending directions of the bifurcating fluid channels are not overlapped with each other" connotes a state where axial lines of the bifurcating fluid channels are not overlapped with each other when viewed in the extending direction of the trunk fluid channel. Moreover, a definition of "the respective valve members are not overlapped with each other in the extending direction of the trunk fluid channel" connotes a state where the upper valve member does not, though the valve members of different couples are partially overlapped in the extending direction of the trunk fluid channel, run on the lower valve member when setting the extending direction of the trunk fluid channel as a perpendicular direction.

If the angle θ is 180°, the axial lines of the bifurcating fluid channels of the couples of the branch fluid channels neighboring to each other in the extending direction of the trunk fluid channel form straight lines that intersect each other, with the trunk fluid channel being centered, at an arbitrary angle other than 180°, however, it is preferable in terms of preventing the valve members from being overlapped with each other in the extending direction of the trunk fluid channel to form the straight lines intersecting each other, with the trunk fluid channel being centered, at an angle of 90° through 120°.

If the angle θ is equal to or large than 90° but smaller than 180°, it is preferable to form the branch fluid channels in such a configuration that the extending direction of the bifurcating fluid channel in one branch fluid channel is overlapped with the extending direction of the communicating fluid channel in the other branch fluid channel with respect to the couples of the branch fluid channels neighboring to each other in the extending direction of the trunk fluid channel.

Especially if the angle θ is 180° or 90°, it is preferable in terms of reducing the internal volume while forming a greater number of branch fluid channels that the two orthogonal straight lines are formed by each couple of the bifurcating fluid channels when viewed in the extending direction of the trunk fluid channel with respect to the couples of the branch fluid channels neighboring to each other in the extending direction of the trunk fluid channel.

The block valve of the present invention may further comprise other components other than the components described above. These other components are given such as a nozzle connected to an end portion of the communicating fluid channel on an external side of the block portion and to an end portion of the trunk fluid channel.

### <SMB Apparatus of the Present Invention>

The SMB apparatus of the present invention comprises an endless fluid channel formed by a plurality of columns each accommodating a separating agent for separating a target substance in the sample containing the target substance and by a plurality of connection fluid channels that connect these columns in series, a plurality of fluid channel switching devices each provided at every connection fluid channel, and a plurality of fluid channels each connected to every fluid channel switching device. The plurality of fluid channels includes a first fluid channel for supplying a mobile phase to the endless fluid channel, a second fluid channel for supplying the sample to the endless fluid channel, and third and fourth fluid channels for discharging the mobile phase from the endless fluid channel. The fluid channel switching device is the block valve of the present invention. The connection fluid channel includes the trunk fluid channel, and the plurality of fluid channels is connected to the respective branch fluid channels.

Namely, the SMB apparatus of the present invention can be constructed of, other than the fluid channel switching device, a known SMB apparatus as disclosed in, e.g., Japanese Patent Application Laid-Open Publication No.6-239767, wherein the mobile phase containing the target substance is discharged from the endless fluid channel via any one or both of the third and fourth fluid channels.

The target substance is not limited in particular, however, the present invention can be preferably applied to separating and manufacturing an optical isomer, wherein the target substance be, it is desirable, prepared with high purity because of applications to medicines and pharmaceuticals.

The separating agent received in the column is selected corresponding to the target substance. For example, if the target substance is the optical isomer, the separating agent is not particularly limited if capable of separating the optical isomer, however, a preferable separating agent is a polysaccharide or a polysaccharide derivative, which are capable of separating the optical isomer.

The polysaccharide is not especially restricted if being an optically-active polysaccharide but may also be any one of a synthetic polysaccharide, a natural polysaccharide and a natural product property-modified polysaccharide. The polysaccharide is preferably a polysaccharide exhibiting high regularity of a binding pattern and also preferably a chain polysaccharide. A variety of exemplifications of the polysaccharide can be given, however, cellulose and amylose are especially preferable.

The polysaccharide derivative is not limited in particular if being a compound having the polysaccharide and a functional group advantageously acting on the separation of the optical isomer defined as the target substance. It is preferable that the polysaccharide derivative be any one derivative selected from an ester derivative of cellulose, a carbamate derivative of cellulole, an ester derivative of amylose and a carbamate derivative of amylose. The polysaccharide derivative is exemplified by a variety of polysaccharide derivatives described in International Publication Pamphlet No.95/23125.

The separating agent may be received directly in a column tube and may also be packed in a column tube in a state of being carried on a proper carrier. The separating agent is used in the way of being formed in particles, carried on a particular carrier such as silica, formed as a monolith so as to be stored in the column tube, or carried on the porous monolith such as a silica rod. The separating agent taking these forms can be generated and carried on the carrier by employing the known technologies such as carrying by physical adsorption and carrying by chemically binding the separating agent to the carrier directly or indirectly.

The sample is not limited in particular if being a solution of a composition containing the target substance. It is preferable that the solvent for the sample be a mobile phase, however, other organic solvent may also be available.

The mobile phase is properly selected corresponding to various conditions such as a type of the separating agent and a type of the target substance. The mobile phase can involve using the solvent normally employed in the SMB apparatus, such as organic solvent, water and a mixed liquid thereof.

The organic solvent medium can be exemplified by ethanolamine; a lower alcohol such as methanol, ethanol, isopropyl alcohol; a low-polarity solvent such as normal-hexane; a polarity solvent such as acetonitrile, ethyl acetate; a mixed solvent as a mixture thereof, an acidic solvent such as acetic acid, and a basic solvent such as diethylamine.

A mixing ratio of the mixed solvent is not particularly restricted, however, it is preferable in terms of optimizing a period of elution time of the target substance and making the preferable separation thereof that a volume ratio of a first solvent to a second solvent (first solvent : second solvent) is 10: 90 through 50:50. Further, the volume ratio (%) of the acidic solvent medium or the basic solvent medium is, in terms of stabilization of the target substance and restraining adverse influence on the separating agent, preferably 0.01 - 0.5 % and more preferably 0.01 - 0.2 % with respect to the whole mobile phase.

The SMB apparatus according to the present invention may further comprise other components in addition to the components described above. Given as these other components are, for example, a fifth fluid channel, connected to the fluid channel switching device, for discharging the mobile phase from the endless fluid channel and supplying the mobile phase to the first fluid channel, an concentration device for concentrating the mobile phase discharged from the endless fluid channel via the third or fourth fluid channel, and a mobile phase collecting device for collecting the mobile phase distillated from the concentration device and supplying the mobile phase to the first fluid channel. These other components can be constructed of known devices.

Embodiments of the present invention will hereinafter be described in greater detail.

### <First Embodiment>

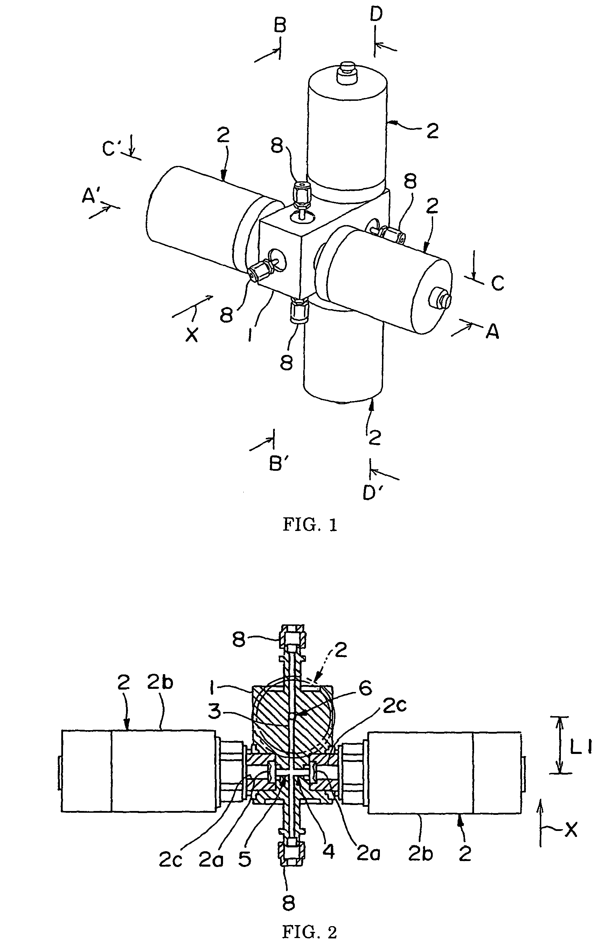

The block valve in a first embodiment of the present invention comprises, as illustrated in FIG. 1, a block portion 1 having the fluid channels for the fluid formed in the block portion 1 and four pieces of valve members 2 that permit or cut off the communications of the fluid channels formed in the block portion 1.

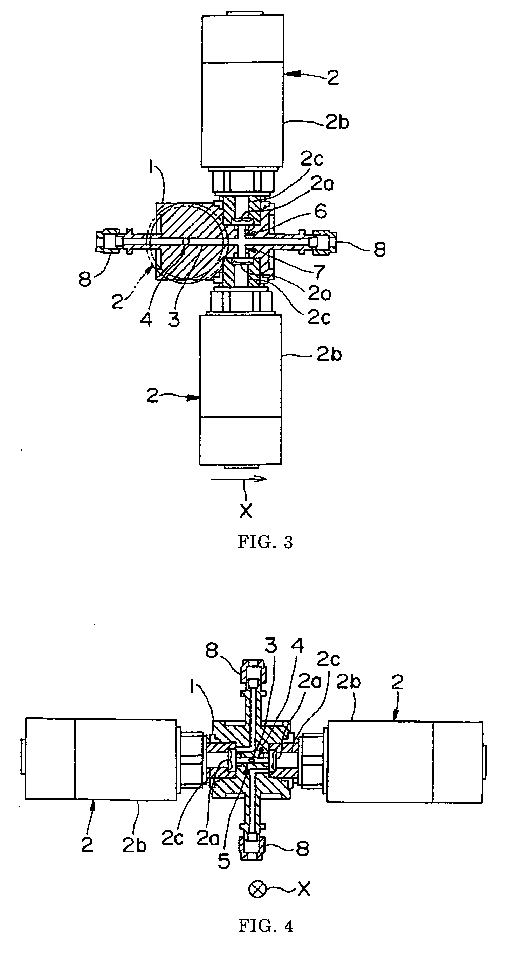

The block portion 1 is formed as a square prism that is rectangular in its sectional shape when cut along the line A-A' in FIG. 1 and is square in its sectional shape when cut along the line C-C'. In the block portion 1, as illustrated in FIGS. 2 and 3, a trunk fluid channel 3 penetrating the block portion 1; and first through fourth branch fluid channels 4 - 7 branching off by twos from each of two points of the trunk fluid channel 3 in an arrow direction X defined as an extending direction of the trunk fluid channel 3; are formed. Nozzles 8 for connecting fluid channels for the fluid to the block valve of the embodiment, are provided at front ends of the trunk fluid channel 3 and of the first through fourth branch fluid channels 4 - 7.

The trunk fluid channel 3 is a fluid channel passing through the center of the block portion 1. Both ends of the trunk fluid channel 3 are provided with the nozzles 8, respectively.

The first and second branch fluid channels 4, 5 are a couple of the branch fluid channels branching off from one point of the trunk fluid channel 3, and the third and fourth branch fluid channels are another couple of the branch fluid channels branching off from another point of the trunk fluid channel 3.

The valve members 2 are respectively provided corresponding to the first through fourth branch fluid channels 4 - 7. The valve members 2 include, as shown in FIGS. 2 through 4, diaphragms 2a defined as valve elements that move forward to and backward from the trunk fluid channel 3 in order to cut off or permit the communications of the first through fourth branch fluid channels 4 - 7, respectively, actuators 2b defined as drive units for moving the diaphragms 2a forward to and backward from the trunk fluid channel 3, and valve shafts 2c that connect the diaphragms 2a to the actuators 2b.

The diaphragm 2a is a disc-like member taking a V-shape with its central portion being recessed in its section, wherein a protruded circular peripheral edge is formed along the periphery of the central portion. The diaphragm 2a is composed of a material such as a nickel-cobalt alloy exhibiting proper elasticity and proper rigidity.

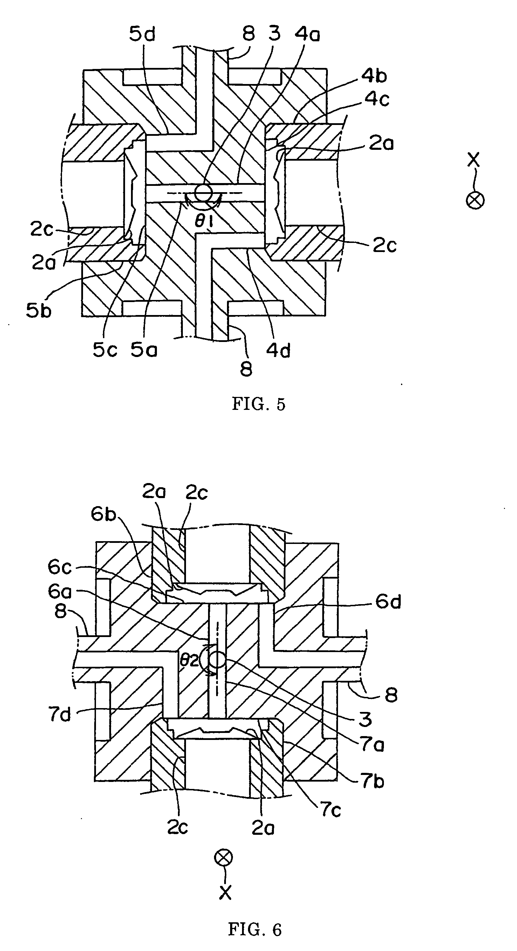

The first branch fluid channel 4 is, as illustrated in FIG. 5, constructed of a first bifurcating fluid channel 4a bifurcating from the trunk fluid channel 3, a first valve cylinder 4b connected to the first bifurcating fluid channel 4a, having a larger sectional area than that of the first bifurcating fluid channel 4 and housing the diaphragm 2a, a first valve seat 4c, formed between the first bifurcating fluid channel 4a and the first valve cylinder 4b, to and from which the diaphragm 2a gets closely fitted and separated away, and a first communicating fluid channel 4d holed in the first valve seat 4c and establishing the communication between the first valve cylinder 4b and the outside of the block portion 1. The front end of the first communicating fluid channel 4d is provided with the nozzle 8.

The trunk fluid channel 3, the first bifurcating fluid channel 4a and the first communicating fluid channel 4d are the same in their diameters (inside diameters), and a radius of the first valve cylinder 4b is set larger than a sum of a radius of the trunk fluid channel 3 and the diameter of the first communicating fluid channel 4d. The first valve cylinder 4b has a flange-shaped flat surface with its sectional area enlarged in a single setting from the first bifurcating fluid channel 4a. The second through fourth branch fluid channels 5 - 7 are, as shown in FIGS. 5 and 6, constructed in the same way as the first branch fluid channel 4 is.

Note that the diameter of the peripheral edge of the diaphragm 2a is larger than the diameter of each of the bifurcating fluid channels, and the diaphragm 2a is provided so that the peripheral edge gets closely fitted to the valve seat when the diaphragm 2a moves forward to each valve seat.

As illustrated in FIG. 5, when viewed in the arrow direction X, the first bifurcating fluid channel 4a and the second bifurcating fluid channel 5a exist on a straight line. Namely, when viewed in the arrow direction X, an angle θ1 made by the first bifurcating fluid channel 4a and the second bifurcating fluid channel 5a is 180°. Similarly, as shown in FIG. 6, when viewed in the arrow direction X, the third bifurcating fluid channel 6a and the fourth bifurcating fluid channel 7a exist on a straight line, and an angle θ2 made by the third bifurcating fluid channel 6a and the fourth bifurcating fluid channel 7a is 180°.

Further, the first and second communicating fluid channels 4d, 5d are, as shown in FIG. 5, respectively holed in the first and second valve seats 4c, 5c in positions that interpose the first and second bifurcating fluid channels 4a, 5a as a couple of the bifurcating fluid channels, and are thus formed in such a shape as to communicate with the outside of the block portion 1. Similarly, the third and fourth communicating fluid channels 6d, 7d are, as illustrated in FIG. 6, respectively holed in the third and fourth valve seats 6c, 7c in positions that interpose the third and fourth bifurcating fluid channels 6a, 7a as a couple of bifurcating fluid channels, and are thus formed in such a shape as to communicate with the outside of the block portion 1.

Moreover, as obvious from FIGS. 1 through 3, when viewing the first and second branch fluid channels 4, 5 and the third and fourth branch fluid channels 6, 7 which are the couples of the branch fluid channels neighboring to each other in the extending direction (the arrow direction X) of the trunk fluid channel 3 in the arrow direction X, axial lines of the first and second bifurcating fluid channels 4a, 5a are orthogonal to axial lines of the third and fourth bifurcating fluid channels 6a, 7a. Namely, when the first and second branch fluid channels 4, 5 and the third and fourth branch fluid channels 6, 7 are viewed in the arrow direction X, these branch fluid channels are formed in a shape that avoids overlapping the extending directions of the respective bifurcating fluid channels. Further, when viewed in the arrow direction X, two orthogonal straight lines are formed by the axial lines of the respective bifurcating fluid channels.

Moreover, axial lines of the actuators 2a of the valve members 2 provided in the first and second branch fluid channels 4, 5 are, as apparent from FIGS. 1 through 3, when viewed in the arrow direction X, orthogonal to axial lines of the actuators 2a of the valve members 2 provided in the third and fourth branch fluid channels 6, 7. Namely, the first and second branch fluid channels 4, 5 and the third and fourth branch fluid channels 6, 7 are, when providing the valve members 2 corresponding to the individual branch fluid channels, formed in a shape that avoids overlapping the valve members 2 with each other in the arrow direction X.

In the block valve of the embodiment, the fluid can be supplied and discharged between the desired branch fluid channel and the trunk fluid channel 3 by connecting the desired branch fluid channel to the trunk fluid channel 3. For example, in the case of scheming to connect the first branch fluid channel 4 to the trunk fluid channel 3, the actuator 2b of the valve member 2 provided in the first branch fluid channel 4 moves the diaphragm 2a away from the first valve seat 4c, while the actuators 2b of the valve members 2 provided in other branch fluid channels move the diaphragms 2a forward to the respective valve seats. With this manipulation, the first branch fluid channel 4 is connected to the trunk fluid channel 3.

In the case of supplying the fluid (e.g., an organic solvent) to the first branch fluid channel 4 from the trunk fluid channel 3, the fluid flows via the first bifurcating fluid channel 4a, the first valve cylinder 4b and the first communicating fluid channel 4d from the trunk fluid channel 3, and is thus supplied to the fluid channel connected to the first branch fluid channel 4 through the nozzle 8.

In the case of supplying the fluid to the trunk fluid channel 3 from the first branch fluid channel 4, the fluid is supplied to the trunk fluid channel 3 via the first communicating fluid channel 4d, the first valve cylinder 4b and the first bifurcating fluid channel 4a. In the first branch fluid channel 4, when the diaphragm 4a is moved forward to the first valve seat 4c, the first branch fluid channel 4 is cut off, thereby stopping a flux of the fluid between the first branch fluid channel 4 and the trunk fluid channel 3.

If the fluid flows to the trunk fluid channel 3, when the supply of the fluid from the first branch fluid channel 4 is stopped, the fluid supplied from the first branch fluid channel 4 might stay in the first bifurcating fluid channel 4a.

In the block valve of the embodiment, however, the extending directions of the first and second bifurcating fluid channels 4a, 5a, comprising a couple, are orthogonal to the extending directions of the first and second communicating fluid channels 4d, 5d to the outside of the block portion 1, and hence, as compared with a case in which the first through fourth communicating fluid channels 4d - 7d are formed in a way that turns back at an acute angle, the valve members 2 do not regulate the turn-back of the first through fourth communicating fluid channels 4d - 7d. Therefore, lengths of the first through fourth bifurcating fluid channels 4a - 7a can be reduced. Accordingly, as compared with the block valve having the first through fourth communicating fluid channels 4d - 7d formed in a way that turns back at the acute angle, a residence area can be decreased.

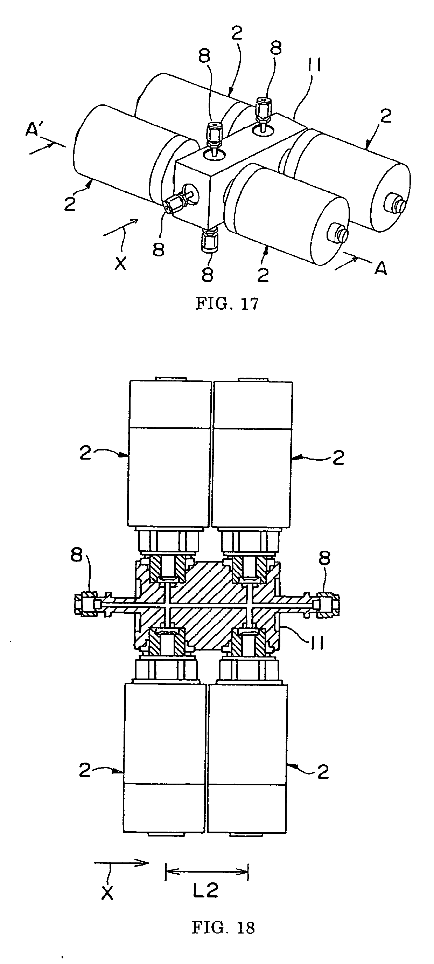

Further, in the block valve of the embodiment, the respective branch fluid channels are formed so that the axial lines of the first and second bifurcating fluid channels 4a, 5a comprising a couple are orthogonal to the axial lines of the third and fourth bifurcating fluid channels 6a, 7a comprising a couple, and hence the valve members 2 corresponding to the individual branch fluid channels neither overlap with each other in the arrow direction X nor regulate each other with respect to their installing positions. Therefore, as compared with the block valve, as illustrated in FIGS. 17 and 18, having the configuration in which the block portions 2 corresponding to the respective branch fluid channels are parallel in the arrow direction X, it is possible to reduce distances between the branching point of the first and second branch fluid channels 4, 5 from the trunk fluid channel 3 and the branching point of the third and fourth branch fluid channels 6, 7 from the trunk fluid channel 3.

In the block valve of the embodiment, though different depending on factors such as the type and the size of the block portion 2 and the length of the bifurcating fluid channel, L1 can be reduced down to approximately 2/3 of L2, where L1 is the couple-to-couple length in the trunk fluid channel 3 in the block valve of the embodiment, and L2 is the couple-to-couple length in the trunk fluid channel 3 in the valve member parallel type block valve. Accordingly, the internal volume of the block valve can be decreased to a greater degree than the valve member parallel type block valve.

Moreover, the block valve of the embodiment involves using the block portion 1 formed as the square prism taking the square in its sectional shape in the arrow direction X, and the respective branch fluid channels, though orthogonal in their directions with respect to different couples of these branch fluid channels when viewed in the arrow direction X, have the same construction, whereby the length of the bifurcating fluid channel in each branch fluid channel can be fixed, and the length of the communicating fluid channel in each branch fluid channel can be fixed. Accordingly, more of the effect is obtained in terms of forming the plurality of branch fluid channels arranged equally when viewed in the arrow direction X.

### <Second Embodiment>

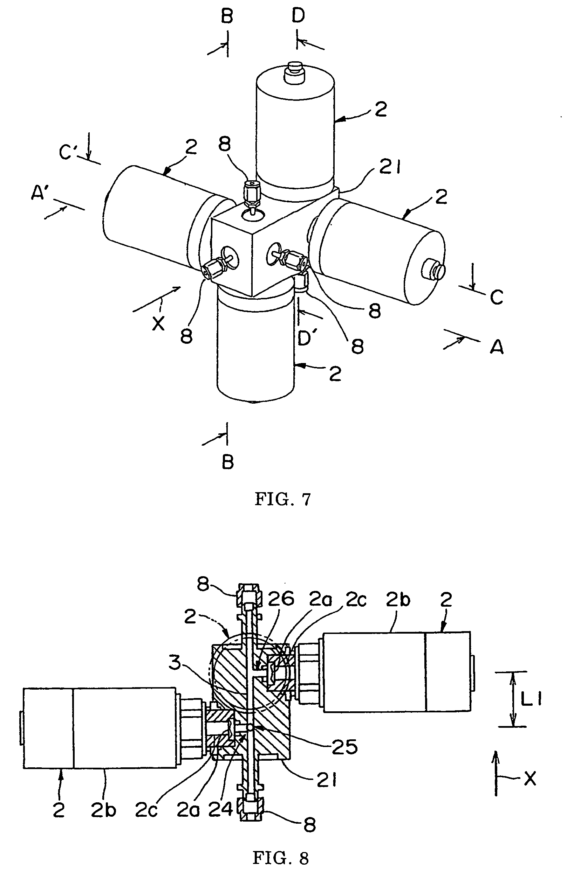

A block valve of the embodiment comprises, as shown in FIG. 7, a block portion 21 having the fluid channels for the fluid formed in the block portion 21, and four pieces of valve members 2 that permit or cut off the communications of the fluid channels formed in the block portion 21.

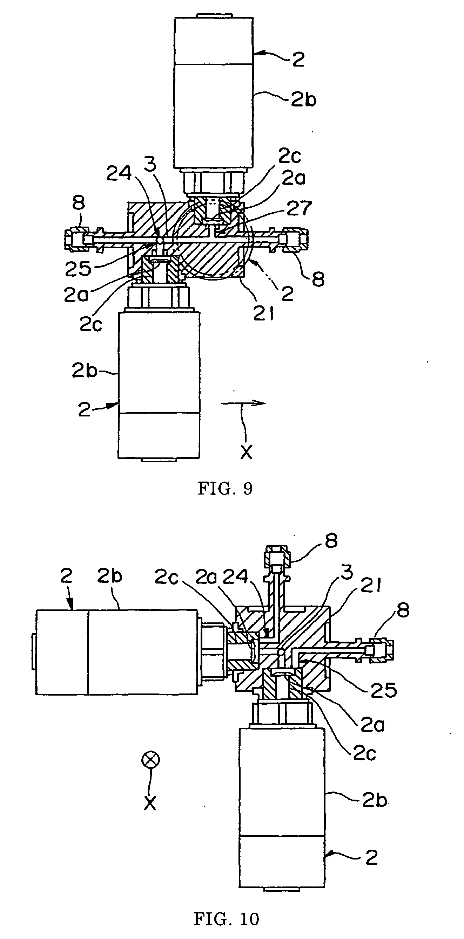

The block portion 21 is, other than a shape of the fluid channel, formed into the same square prism as the block portion 1 is formed. The block portion 21 has, as illustrated in FIGS. 8 and 9, the trunk fluid channel 3 penetrating the block portion 21 and first through fourth branch fluid channels 24 - 27 branching off by twos from each of two points of the trunk fluid channel 3 in the arrow direction X defined as the extending direction of the trunk fluid channel 3.

The first and second branch fluid channels 24, 25 are a couple of branch fluid channels branching off from one point of the trunk fluid channel 3, and third and fourth branch fluid channels 26, 27 are another couple of branch fluid channels branching off from another point of the trunk fluid channel 3. The nozzles 8 are provided at the front ends of the trunk fluid channel 3 and of the first through fourth branch fluid channels 24 - 27.

The first through fourth branch fluid channels 24 - 27 are, as illustrated in FIGS. 8 - 12, constructed in the same way as the branch fluid channels of the first embodiment are, other than a difference of the angle made by the bifurcating fluid channels of a couple of the branch fluid channels and a difference of the position where the communicating fluid channel is holed in the valve seat with respect to any one of the branch fluid channels.

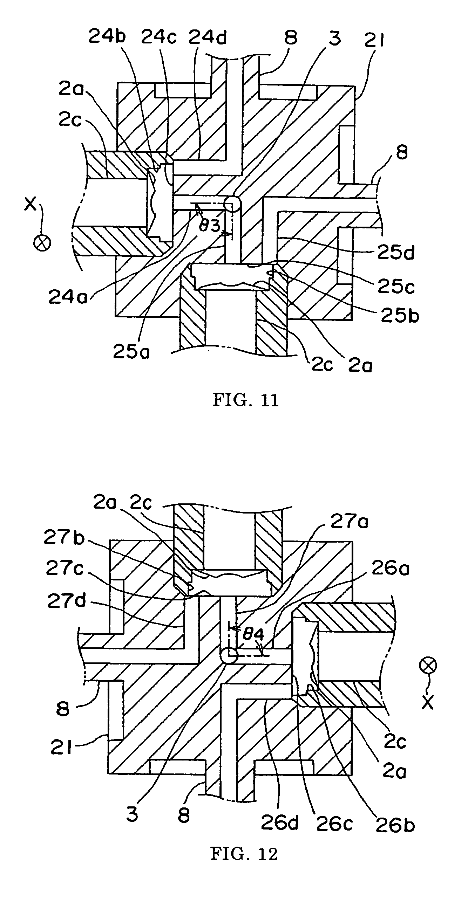

As shown in FIG. 11, when viewed in the arrow direction X, a first bifurcating fluid channel 24a is orthogonal to a second bifurcating fluid channel 25a. Namely, when viewed in the arrow direction X, an angle θ3 made by the axial line of the first bifurcating fluid channel 24a and the axial line of the second bifurcating fluid channel 25a is 90°. Similarly, as shown in FIG. 12, when viewed in the arrow direction X, a third bifurcating fluid channel 26a is orthogonal to a fourth bifurcating fluid channel 27a, and an angle θ4 made by the axial line of the third bifurcating fluid channel 26a and the axial line of the fourth bifurcating fluid channel 27a is 90°.

Further, first and second communicating fluid channels 24d, 25d are, as illustrated in FIG. 11, respectively holed in first and second valve seats 24c, 25c in positions on the same side as the first and second bifurcating fluid channels 24a, 25a defined as a couple of bifurcating fluid channels, i.e., in the positions on the opposite side to the side on which to make the angle θ3, and are formed in a shape communicating with the outside of the block portion 21. Similarly, third and fourth communicating fluid channels 26, 27 are, as illustrated in FIG. 12, respectively holed in third and fourth valve seats 26c, 27c in positions on the same side as the third and fourth bifurcating fluid channels 26a, 27a defined as a couple of bifurcating fluid channels, i.e., in the positions on the opposite side to the side on which to make the angle θ4, and are formed in a shape communicating with the outside of the block portion 21.

Moreover, as obvious from FIGS. 7 through 10, when viewed in the extending direction (the arrow direction X) of the trunk fluid channel 3, the axial line of the bifurcating fluid channel 24a is orthogonal to the axial line of the second bifurcating fluid channel 25a, and the axial line of the third bifurcating fluid channel 26a is orthogonal to the axial line of the fourth bifurcating fluid channel 27a. Moreover, the axial line of the first bifurcating fluid channel 24a and the axial line of the third bifurcating fluid channel 26a exist on the straight line, and the axial line of the second bifurcating fluid channel 25a and the axial line of the fourth bifurcating fluid channel 27a exist on the straight line. Namely, the first and second branch fluid channels 24, 25 and the third and fourth branch fluid channels 26, 27 are, as viewed in the arrow direction X, formed in a shape that avoids overlapping of the extending directions of the respective bifurcating fluid channels. Further, when viewed in the arrow direction X, two orthogonal lines are formed by the axial lines of the respective bifurcating fluid channels.

Furthermore, as apparent from FIGS. 7 through 10, the axial lines of the actuators 2a of the valve members 2, which are provided respectively in the first and second branch fluid channels 24, 25, are orthogonal to each other when viewed in the arrow direction X, and the axial lines of the actuators 2a of the valve members 2, which are provided respectively in the third and fourth branch fluid channels 26, 27, are orthogonal to each other when viewed in the arrow direction X. Namely, the first and second branch fluid channels 24, 25 and the third and fourth branch fluid channels 26, 27 are formed in a shape that avoids overlapping the valve members 2 with each other in the arrow direction X when providing the valve members 2 corresponding to the respective branch fluid channels.

The block valve of the embodiment can be operated in the same way as the block valve of the first embodiment discussed above is, and exhibits the same effects as those of the block valve of the first embodiment.

### <Third Embodiment>

A block valve of the embodiment comprises a block portion 31 taking a shape of hexagonal prism, a trunk fluid channel 3 penetrating the center of the hexagonal prism, first through sixth branch fluid channels branching off by twos from each of different three points of the trunk fluid channel 3 in the arrow direction X defined as the extending direction of the trunk fluid channel 3, and six pieces valve members 2 provided in the respective branch fluid channels. The first branch fluid channel is paired with the second branch fluid channel, the third branch fluid channel is paired with the fourth branch fluid channel, and the fifth branch fluid channel is paired with the sixth branch fluid channel.

The third and fourth branch fluid channels are formed on the side of the arrow direction X of the first and second branch fluid channels, and the fifth and sixth branch fluid channels are formed farther on the side of the arrow direction X of the third and fourth branch fluid channels. In the arrow direction X, an interval between the first and second branch fluid channels and the third and fourth branch fluid channels is set to L1, and an interval between the third and fourth branch fluid channels and the fifth and sixth branch fluid channels is set to L1, respectively.

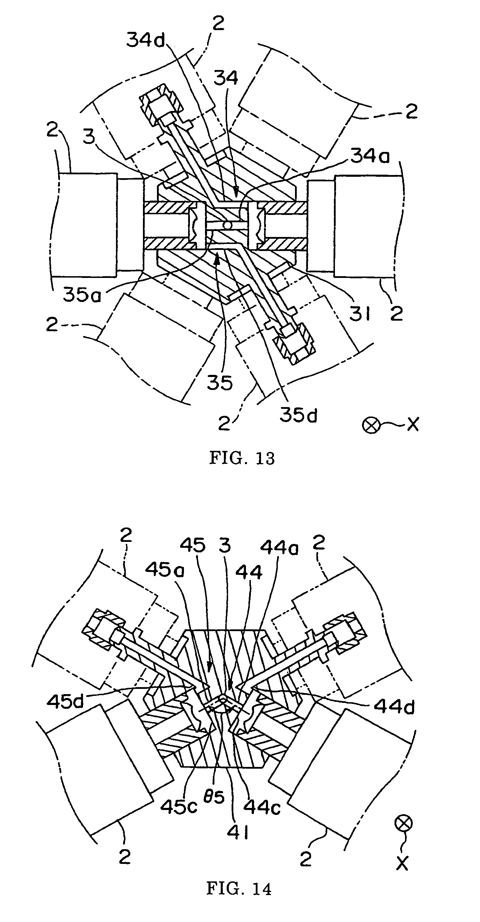

First and second branch fluid channels 34, 35 are, as illustrated in FIG. 13, except that first and second communicating fluid channels 34d, 35d are bent at an angle of 60° in a clockwise direction with respect to a sheet surface, formed in the same way as the first and second branch fluid channels 4, 5 in the first embodiment are formed. Note that the valve members 2 provided respectively corresponding to the third and fourth branch fluid channels are depicted by one-dot chain lines, and the valve members 2 provided respectively corresponding to the fifth and sixth branch fluid channels are depicted by two-dot chain lines.

As shown in FIG. 13, when viewed in the arrow direction X, an axial line of a first bifurcating fluid channel 34a in the first branch fluid channel 34 and an axial line of a first bifurcating fluid channel 35a in the second branch fluid channel 35 exist on a straight line. Further, as illustrated in FIG. 13, when viewed in the arrow direction X, axial lines of the actuators of the valve members 2 provided respectively in the first and second branch fluid channels 34, 35 and axial lines of the first and second bifurcating fluid channels 34a, 35a exist on the same straight line.

Further, as obvious from FIG. 13, when viewed in the arrow direction X, the axial lines of the first and second bifurcating fluid channels 34a, 35a and the axial lines of the third and fourth bifurcating fluid channel intersect each other at an angle of 60° counterclockwise with respect to the sheet surface, and the axial lines of the third and fourth bifurcating fluid channels and the axial lines of the fifth and sixth bifurcating fluid channel intersect each other at the angle of 60° counterclockwise with respect to the sheet surface.

Namely, the first and second branch fluid channels 34, 35, the third and fourth branch fluid channels, and the fifth and sixth branch fluid channels are, when viewed in the arrow direction X, formed in a shape that avoids overlapping of the extending directions of the respective bifurcating fluid channels. Moreover, the first and second branch fluid channels 34, 35, the third and fourth branch fluid channels, and the fifth and sixth branch fluid channels are formed in such a shape that the valve members 2 corresponding to the individual branch fluid channels do not overlap with each other in the arrow direction X.

The block valve of the embodiment can reduce the residence area in the same way as by the block valves of the first and second embodiments, and enables the internal volume to be smaller than by the valve member parallel type block valve.

Further, the block valve of the embodiment enables the six branch fluid channels to be provided so that the valve members 2 are not adjacent to each other in the arrow direction X, and is more effective in terms of forming the four or more branch fluid channels arranged equally when viewed in the arrow direction X.

### <Fourth Embodiment>

A block valve of the embodiment comprises a block portion 41 taking a shape of hexagonal prism, the trunk fluid channel 3 penetrating the center of the hexagonal prism, first through fourth branch fluid channels branching off by twos from each of two different points in the arrow direction X defined as the extending direction of the trunk fluid channel 3, and the four pieces of valve members 2 provided in the respective branch fluid channels. The first branch fluid channel is paired with the second branch fluid channel, and the third branch fluid channel is paired with the fourth branch fluid channel.

The third and fourth branch fluid channels are formed on the side of the arrow direction X of the first and second branch fluid channels. An interval between the first and second branch fluid channels and the third and fourth branch fluid channels in the arrow direction X is set to L1.

First and second branch fluid channels 44, 45 are, as illustrated in FIG. 14, except that an angle θ5 made by an axial line of a first bifurcating fluid channel 44a and by an axial line of a second bifurcating fluid channel 45a is 120° and that first and second communicating fluid channels 44d, 45d are bent at an angle of 120° in the clockwise direction with respect to the sheet surface, formed in the same way as the first and second branch fluid channels 24, 25 in the second embodiment.

Namely, the first and second branch fluid channels 44, 45 are holed respectively in first and second valve seats 44c, 45c in positions opposite to the side on which to make the angle θ5, and are formed in a shape enabling the communication with the outside of the block portion 41.

Note that the third and fourth branch fluid channels are formed in the same way as the first and second branch fluid channels 44, 45 are. Furthermore, in FIG. 14, the valve members 2 provided corresponding to the third and fourth branch fluid channels are depicted by one-dot chain lines.

Moreover, as apparent from FIG. 14, when viewed in the arrow direction X, the axial line of the first bifurcating fluid channel 44a and the axial line of the second bifurcating fluid channel 45a intersect each other at an angle of 120°, and the axial line of the third bifurcating fluid channel and the axial line of the fourth bifurcating fluid channel intersect each other at the angle of 120°. Further, the axial line of the first bifurcating fluid channel 44a and the axial line of the third bifurcating fluid channel exist on a straight line, and the axial line of the second bifurcating fluid channel 45a and the axial line of the fourth bifurcating fluid channel exist on a straight line.

Namely, the first and second branch fluid channels 44, 45 and the third and fourth branch fluid channels are formed in a shape that avoids overlapping of the extending directions of the respective bifurcating fluid channels when viewed in the arrow direction X. Moreover, the first and second branch fluid channels 44, 45 and the third and fourth branch fluid channels are formed in a shape that avoids overlapping the valve members 2 corresponding to the individual branch fluid channels in the arrow direction X.

The block valve of the embodiment can reduce the residence area in the same way as by the block valves of the first through third embodiments, and enables the internal volume to be smaller than by the valve member parallel type block valve.

Further, the block valve of the embodiment takes, when viewed in the arrow direction X, an X-like shape slightly flatter than the block valve according to the second embodiment. Therefore, this is more effective in terms of installing the block valve in a shape- and size-restricted place such as an elongate space and a narrow space.

### <Fifth Embodiment>

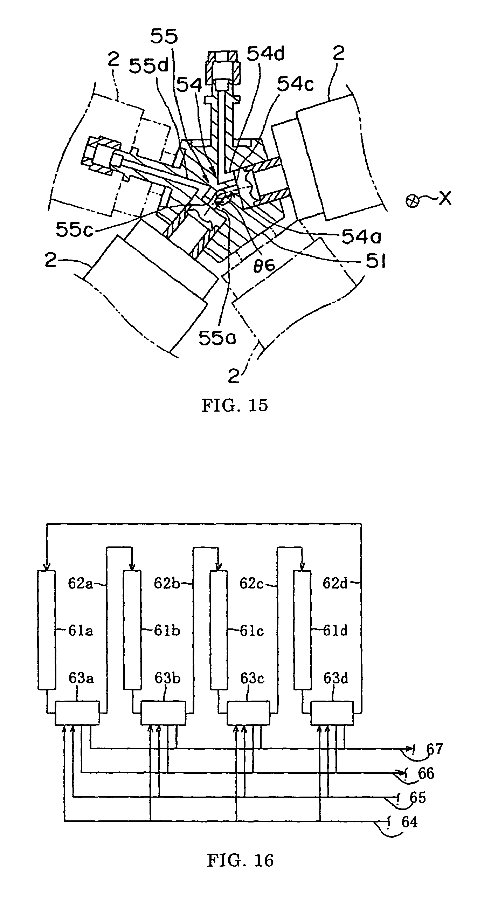

A block valve of the embodiment is, as illustrated in FIG. 15, constructed in the same way as the block valve of the fourth embodiment is, except that a block portion 51 takes a shape of pentagonal prism and except for having a different angle made by an axial line of a first bifurcating fluid channel 54a and by an axial line of a second bifurcating fluid channel 55a, a different bending angle of each of first and second communicating fluid channels 54d, 55d and different directions of third and fourth branch fluid channels with respect to first and second branch fluid channels 54, 55 when viewed in the arrow direction X.

In the block valve of the embodiment, an angle θ6 made by the axial line of the first bifurcating fluid channel 54a and by the axial line of the second bifurcating fluid channel 55a is 144°, and first and second communicating fluid channels 54d, 55d are bent at an angle of 108° in the clockwise direction with respect to the sheet surface, and third and fourth branch fluid channels are formed, when viewed in the arrow direction X, in positions where the first and second branch fluid channels 54, 55 are rotated through 72° clockwise.

Namely, the first and second branch fluid channels 54, 55 are holed respectively in first and second valve seats 54c, 55c in positions opposite to the side on which to make the angle θ6, and are formed in a shape that establishes the communication with the outside of the block portion 51.

Moreover, as obvious from FIG. 15, when viewed in the arrow direction X, the axial line of the first bifurcating fluid channel 54a and the axial line of the third bifurcating fluid channel intersect each other at an angle of 72° in the clockwise direction, and the axial line of the second bifurcating fluid channel 55a and the axial line of the fourth bifurcating fluid channel intersect each other at the angle of 72° in the clockwise direction. Further, the axial line of the first bifurcating fluid channel 54a and the axial line of the fourth bifurcating fluid channel intersect each other at an angle of 216° in the clockwise direction, and the axial line of the second bifurcating fluid channel 45a and the axial line of the third bifurcating fluid channel intersect each other at an angle of 288° in the clockwise direction.

Namely, the first and second branch fluid channels 54, 55 and the third and fourth branch fluid channels are, when viewed in the arrow direction X, formed in a shape that avoids overlapping of the extending directions of the respective bifurcating fluid channels. Furthermore, the first and second branch fluid channels 54, 55 and the third and fourth branch fluid channels are formed in a shape that avoids overlapping of the valve members 2 corresponding to the individual branch fluid channels in the arrow direction X.

The block valve of the embodiment can reduce the residence area in the same way as by the block valves of the first through third embodiments, and enables the internal volume to be smaller than by the valve member parallel type block valve.

The block valve of the embodiment takes, when viewed in the arrow direction X, a shape having slightly more of a bias than the block valve of the third embodiment. Therefore, this is more effective in terms of installing the block valve in a place such as a portion near to a wall, wherein the shape and installing conditions are restricted.

### <Sixth Embodiment>

An SMB apparatus of the embodiment comprises, as illustrated in FIG. 16, an endless fluid channel comprised of four pieces of columns 61a - 61d and four lines of connection fluid channels 62a - 62d that connect these columns 61a - 61d in series, four pieces of fluid channel switching devices 63a - 66d provided in the connection fluid channels 62a - 62d, and first through fourth fluid channels 64 - 67 connected to the respective fluid channel switching devices 63a - 66d.

Each of the columns 61a - 61d accommodates a separating agent for separating a target substance from within the sample containing the target substance.

The connection fluid channels 62a - 62d are fluid channels that connect the columns via the fluid channel switching devices. The connection fluid channel 62a is the fluid channel that connects the column 61a to the column 61b via the fluid channel switching device 63a, the connection fluid channel 62b is the fluid channel that connects the column 61b to the column 61c via the fluid channel switching device 63b, the connection fluid channel 62c is the fluid channel that connects the column 61c to the column 61d via the fluid channel switching device 63c, and the connection fluid channel 62d is the fluid channel that connects the column 61d to the column 61a via the fluid channel switching device 63d.

The fluid channel switching devices 63a - 66d are defined as the block valve of the first embodiment discussed above. Both ends of the trunk fluid channel 3 of the fluid channel switching device 63a are connected to the connection fluid channel 62a via the nozzle 8 so that the trunk fluid channel 3 of the fluid channel switching device 63a is included in the connection fluid channel 62a. Similarly, both ends of the trunk fluid channel 3 of each of the fluid channel switching devices 63b - 63d are connected to each of the connection fluid channels 62b - 62d via the nozzles 8 so that the trunk fluid channel 3 of each of the fluid channel switching devices 63b - 63d is included in each of the connection fluid channels 62ab - 62d.

The first fluid channel 64 is the fluid channel for supplying the mobile phase to the endless fluid channel. The first fluid channel 64 is bifurcated into four fluid channels, wherein the first bifurcating fluid channels 64 are connected to the first branch fluid channels 4 of the fluid channel switching devices 63a - 66d via the nozzles 8. The first fluid channel 64 is provided with a tube, a tank for storing the mobile phase and proper devices for supplying the mobile phase such as a pump and a valve.

The second fluid channel 65 is the fluid channel for supplying the sample to the endless fluid channel. The second fluid channel 65 is bifurcated into four fluid channels, wherein the second bifurcating fluid channels 65 are connected to the second branch fluid channels 5 of the fluid channel switching devices 63a - 66d via the nozzles 8. The second fluid channel 65 is provided with a syringe for impregnating the liquid sample into the second fluid channel 65, and proper devices for supplying the sample such as a pump and a valve.

The third and fourth fluid channels 66, 67 are the fluid channels for discharging the mobile phase from the endless fluid channel. The third and fourth fluid channels 66, 67 are each bifurcated into four fluid channels, wherein the third bifurcating fluid channels 66 are connected to the third branch fluid channels 6 of the fluid channel switching devices 63a - 66d via the nozzles 8, and the fourth bifurcating fluid channels 67 are connected to the fourth branch fluid channels 7 of the fluid channel switching devices 63a - 66d via the nozzles 8. The third and fourth fluid channels 66, 67 are provided with the proper devices for discharging the mobile phase such as a pump and a valve and with unillustrated concentration devices that concentrate the mobile phase discharged from the endless fluid channel.

Moreover, the SMB apparatus of the embodiment is constructed in a way that further comprises an unillustrated mobile phase collecting/regenerating device collecting the mobile phase distillated from the concentration device and adjusting the composition thereof, wherein the mobile phase regenerated by the mobile phase collecting/regenerating device is supplied to the first fluid channel 64.

Herein, an operation of the SMB apparatus of the embodiment will be described on the assumption that the columns 1a -1d are filled with particle fillers composed of silica particles and polysaccharide derivatives such as carbamate derivatives of amylose, which are carried on the silica particles, the assumption that the sample is a solution of a racemic body of the optical isomer for applications to medicines and pharmaceuticals, the assumption that the target substance is the optical isomer used for the medicines, and the assumption that the mobile phase is a mixed solvent containing methanol, acetonitrile and a minute amount of amine for these substances.

In the fluid channel switching device 63d, the first branch fluid channel 4 is communicated with the trunk fluid channel 3, while the communications of other branch fluid channels with the trunk fluid channel 3 are cut off. With this contrivance, the mobile phase is quantitatively supplied to the endless fluid channel from the first fluid channel 64 via the fluid channel switching device 63d.

Further, in the fluid channel switching device 63b, the second branch fluid channel 5 is communicated with the trunk fluid channel 3, while the communications of other branch fluid channels with the trunk fluid channel 3 are cut off. With this contrivance, the liquid sample is quantitatively supplied to the endless fluid channel from the second fluid channel 65 via the fluid channel switching device 63b.

Moreover, in the fluid channel switching device 63c, the third branch fluid channel 6 is communicated with the trunk fluid channel 3, while the communications of other branch fluid channels with the trunk fluid channel 3 are cut off. With this contrivance, the mobile phase is quantitatively discharged to the third fluid channel 66 from the endless fluid channel via the fluid channel switching device 63c.

Similarly, in the fluid channel switching device 63a, the fourth branch fluid channel 7 is communicated with the trunk fluid channel 3, while the communications of other branch fluid channels with the trunk fluid channel 3 are cut off. With this contrivance, the mobile phase is quantitatively discharged to the fourth fluid channel 67 from the endless fluid channel via the fluid channel switching device 63a.

The sample supplied to the endless fluid channel gradually moves, while repeating adsorption to and desorption from the separating agent in the column 61c, within the column 61c in a flux direction of the mobile phase. An easier-to-adsorb-to-the-separating agent component (extract) in the sample moves slower within the column 61c, while a harder-to-adsorb-to-the-separating agent component (raffinate) in the sample moves faster within the column 61c.

When the extract and the raffinate pass through the column 61c, while keeping a relative positional relationship between connecting positions of the respective fluid channels with respect to the endless fluid channel, the connecting positions of the respective fluid channels with respect to the endless fluid channel are changed by one column over to the downstream side in the flux direction of the mobile phase in the endless fluid channel.

To be specific, in the fluid channel switching device 63a, the first branch fluid channel 4 is communicated with the trunk fluid channel 3 while the communications of other branch fluid channels with the trunk fluid channel 3 are cut off; in the fluid channel switching device 63c, the second branch fluid channel 5 is communicated with the trunk fluid channel 3 while the communications of other branch fluid channels with the trunk fluid channel 3 are cut off; in the fluid channel switching device 63d, the third branch fluid channel 6 is communicated with the trunk fluid channel 3 while the communications of other branch fluid channels with the trunk fluid channel 3 are cut off; and in the fluid channel switching device 63b, the fourth branch fluid channel 7 is communicated with the trunk fluid channel 3 while the communications of other branch fluid channels with the trunk fluid channel 3 are cut off.

When a period of time for which the extract and the raffinate pass through the column 61c is defined as one period, the fluid channel is switched over for every period. The period of time for which the extract and the raffinate pass through the column 61c may be obtained by extracting the mobile phase from the connection fluid channel 62c and analyzing the extracted mobile phase, and may also be calculated from a computer-based simulation test.

With an elapse of several periods, in the endless fluid channel, in the endless fluid channel on the downstream side from the connecting position of the second fluid channel 65, the raffinate comes to a state of its being maldistributed and enriched, and in the endless fluid channel on the upstream side from the connecting position of the second fluid channel 65, the extract comes to a state of its being maldistributed and enriched. Then, the mobile phase containing the extract starts being discharged to the third fluid channel 66, while the mobile phase containing the raffinate starts being discharged to the fourth fluid channel 67.

In the endless fluid channel, the sample is continuously quantitatively supplied to the endless fluid channel by further continuing the switchover of each fluid channel for every period, and the extract or the raffinate turning into a product is continuously quantitatively discharged from the endless fluid channel.

The mobile phases discharged to the third and fourth fluid channels 66, 67 are concentrated respectively by the concentration devices. The thus-acquired concentrated liquid contains the high-concentration extract or raffinate and is refined as the necessity may arise. If one of the extract and the raffinate is the target substance, the other is racemized by a known method such as a heating treatment and an enzyme-based treatment and thus can be reused for the sample.

Moreover, the mobile phases distillated from the concentration devices are collected by the mobile phase collecting/regenerating device, wherein the compositions thereof are adjusted. The adjusted solvent is supplied to the first fluid channel 64 and reused for the mobile phase.

In the fluid channel switching devices 63a - 63d, the distance L1 between the branch fluid channels is shorter than in the valve member parallel type block valve. Hence, a volume of space (Vs) of the whole SMB apparatus of the embodiment is smaller than the volume of space of the SMB apparatus employing the valve member parallel type block valve for the fluid channel switching device. Accordingly, the SMB apparatus of the embodiment can make a ratio (Vs/Vc) of the volume-of-space Vs to the internal volume Vc of the column much smaller than by the SMB apparatus using the valve member parallel type block valve for the fluid channel switching device, and can restrain a decline of separating performance due to diffusion of the mobile phase within the apparatus.

Further, the fluid channel switching devices 63a - 63d are capable of reducing the residence areas generated in the bifurcating fluid channels, and hence, in the fluid channel switching devices 63a - 63d, it is possible to restrain staying matters from occurring, such as the sample, the mobile phase containing the target substance, a cleaning fluid for cleaning and washings produced due to cleaning. It is therefore possible to restrain the product from being adversely affected by the staying matters and to acquire the high cleaning property of the apparatus.

The effect concerning the volume of space in the embodiment is more conspicuous on condition that the internal volume Vc of the column is on the order of 15 mL - 150 mL, and the volume-of-space Vs of the whole apparatus excluding the columns is on the order of 10 mL - 50 mL. Further, the effect concerning suppression of residence of the embodiment is conspicuous in the case of preparing the substance requiring strict process management and a substance that lacks stability physically or chemically such as the optical isomer for the applications to the medicines and the pharmaceuticals as described above.

Moreover, the SMB apparatus of the embodiment collects the mobile phase discharged from the endless fluid channel and regenerates the mobile phase for the reuse, which is more effective in terms of reducing a quantity of the organic solvent to be newly supplied, a disposal quantity and costs required for this.

It should be noted that the block valve of the first embodiment is employed for the fluid channel switching devices 63a - 63d, however, the effects described above can be acquired even by using any one of the block valves of the second, fourth and fifth embodiments in place of the block valve of the first embodiment.

Furthermore, in the embodiment, the plural fluid channels connected to the endless fluid channel are the first through fourth fluid channels, however, the plurality of fluid channels may further include a fifth fluid channel for discharging the mobile phase from the endless fluid channel and supplying the mobile phase to the first fluid channel. In this case, the effects related to reducing the internal volume and the residence area can be acquired by using the block valve of the third embodiment as a substitute for the block valve of the first embodiment. Moreover, in this instance, one of the branch fluid channels of the block valve of the third embodiment may be plugged with a blind patch and a screw.

## Claims

1. A block valve comprising:
a block portion having fluid channels for a fluid formed in the block portion; and
a plurality of valve members permitting or cutting off
communications of the fluid channels formed in the block portion,
the block portion comprising:
a trunk fluid channel penetrating the block portion; and
plural couples of branch fluid channels branching off by twos from each of two or more points of the trunk fluid channel in an extending direction of the trunk fluid channel and establishing communications between the trunk fluid channel and the outside of the block portion,
the valve member comprising:
a valve element provided corresponding to each of the branch fluid channels and moving forward to and backward from the trunk fluid channel in order to cut off or permit the communication of the branch fluid channel; and
a drive unit for moving the valve element forward to and backward from the trunk fluid channel,
wherein the branch fluid channel is comprised of a bifurcating fluid channel bifurcating from the trunk fluid channel, a valve cylinder connected to the bifurcating fluid channel, having a sectional area larger than that of the bifurcating fluid channel and housing the valve element, a valve seat, formed between the bifurcating fluid channel and the valve cylinder, to and from which the valve element gets closely fitted and separated away, and a communicating fluid channel holed in the valve seat and establishing a communication between the valve cylinder and the outside of the block portion,
a radius of the valve cylinder is larger than a sum of a radius of the trunk fluid channel and a diameter of the communicating fluid channel,
an angle θ is equal to or larger than 90° but equal to or smaller than 180°, where θ is the angle made by a couple of the bifurcating fluid channels when viewed in the extending direction of the trunk fluid channel,
when the angle θ is 180°, the communicating fluid channels in the couple of the branch fluid channels are fluid channels holed in the valve seats in face-to-face positions, with the couple of the bifurcating fluid channels being interposed therebetween, and formed in a shape enabling the communication with the outside of the block portion,
when the angle θ is equal to or larger than 90° but smaller than 180°, the communicating fluid channels in the couple of the branch fluid channels are fluid channels holed in the valve seats in positions opposite to the side on which to make the angle θ, and formed in a shape enabling the communication with the outside of the block portion, and
couples of the branch fluid channels neighboring to each other in the extending direction of the trunk fluid channel are formed in a shape disabling the extending directions of the bifurcating fluid channels to be overlapped with each other when viewed in the extending direction of the trunk fluid channel, and are also formed in a shape disabling, when providing the valve members, the valve members to be overlapped with each other in the extending direction of the trunk fluid channel.

2. The block valve according to claim 1, wherein the angle θ is 180° or 90°, and when viewed in the extending direction of the trunk fluid channel, two straight lines orthogonal to each other are formed by the bifurcating fluid channels.

3. A simulated moving bed type chromatographic separation apparatus comprising:
an endless fluid channel comprised of a plurality of columns each storing a separating agent for separating a target substance from a sample containing the target substance and a plurality of connection fluid channels that connect the columns in series;
a plurality of fluid channel switching devices provided respectively in the connection fluid channels; and
a plurality of fluid channels connected respectively to the fluid channel switching devices,
the plurality of fluid channels including:
a first fluid channel for supplying a mobile phase to the endless fluid channel;
a second fluid channel for supplying the sample to the
endless fluid channel; and third and fourth fluid channels for discharging the mobile phase from the endless fluid channel, the mobile phase containing the target substance being discharged from the endless fluid channel via one or both of the third and fourth fluid channels,
wherein the fluid channel switching devices are defined as the block valve according to claim 1 or 2,
the connection fluid channels include the trunk fluid channel, and
the plurality of fluid channels is connected respectively to the branch fluid channels.

4. The simulated moving bed type chromatographic separation apparatus according to claim 3, wherein the target substance is an optical isomer, and the separating agent is a polysaccharide derivative selected from a group consisting of an ester derivative of cellulose, a carbamate derivative of cellulose, an ester derivative of amylose and a carbamate derivative of amylose.
